# EUROPÄISCHE PATENTSCHRIFT

(11) **EP 3 557 655 B1**
(45) Veröffentlichungstag und Bekanntmachung des Hinweises auf die Patenterteilung: **04.11.2020**
(21) Anmeldenummer: 19169571.7
(22) Anmeldetag: 16.04.2019
(51) Int. Cl.: H01M 2/10, B25F 5/02

(54) **AKKUPACK UND ELEKTROHANDWERKZEUGGERÄT**
BATTERY PACK AND ELECTRIC HAND-HELD TOOL
BLOC D'ACCUMULATEUR ET APPAREIL OUTIL ÉLECTRIQUE PORTATIF

(30) Priorität: 18.04.2018 DE 102018109209
(43) Veröffentlichungstag der Anmeldung: 23.10.2019
(73) Patentinhaber: Metabowerke GmbH, 72622 Nürtingen (DE)
(72) Erfinder: CONG, Pham, 72793 Pfullingen (DE); Moersch, Christian, 73728 Esslingen (DE); Vogel, Leopold, 72622 Nürtingen (DE); Fleischmann, Bernd, 73235 Weilheim (DE)
(74) Vertreter: Schmid, Wolfgang

(56) Entgegenhaltungen:
- DE-U1-202006 015 385
- DE-U1-202015 100 872
- US-A1- 2014 302 377

## Beschreibung

Die Erfindung betrifft einen Akkupack, insbesondere für ein Elektrohandwerkzeuggerät, mit wenigstens einer Akkuzelle und mit einem Gehäuse zur Aufnahme der wenigstens einen Akkuzelle nach der im Oberbegriff von Anspruch 1 näher definierten Art. Des Weiteren betrifft die Erfindung ein Elektrohandwerkzeuggerät.

Ein gattungsgemäßer Akkupack ist in der DE 20 2015 100 872 U1 beschrieben.

Die DE 20 2006 015 385 U1 beschreibt die Verbindung eines Akkus mit einem Gehäuse eines Elektrohandwerkzeuggeräts.

Weitere solche Akkupacks sind in den unterschiedlichsten Ausführungsformen aus dem Stand der Technik bekannt. Beispiele solcher Akkupacks sind unter anderem der EP 1 927 147 B1, der EP 1 952 518 B1 oder der EP 3 051 608 A1 zu entnehmen.

Das Gehäuse dieser Akkupacks besteht meist aus zwei miteinander verbundenen Gehäuseteilen, zwischen denen die Akkuzelle bzw. ein aus mehreren Akkuzellen zusammengesetzter Akkuzellenblock angeordnet ist. Die Aufgabe des Gehäuses besteht hauptsächlich in der Aufnahme und dem Schutz der wenigstens einen Ackuzelle. Hierzu sollten die beiden Gehäuseteile möglichst sicher miteinander verbunden sein. Andererseits sollte das Gehäuse möglichst wenig zum gesamten Bauraumbedarf des Akkupacks beitragen, um den Akkupack so kompakt wie möglich zu halten.

Gemäß dem allgemeinen Stand der Technik werden die beiden Gehäuseteile meist durch mehrere Schrauben miteinander verbunden. Der Nachteil des Einsatzes von Schrauben besteht neben dem hohen Montageaufwand jedoch in dem vergleichsweise hohen Bauraumbedarf, da für eine solche Schraubverbindung neben der Schraube selbstverständlich eine entsprechende Gewindebohrung benötigt wird, für deren Erzeugung meist ein entsprechender Schraubdom eingesetzt wird, dessen Durchmesser ein Vielfaches des Durchmessers der Schraube beträgt.

Eine weitere Möglichkeit zur Verbindung der Gehäuseteile besteht in der Verwendung von Klipsverbindungen, die sich jedoch während des Betriebs oder wenn der Akkupack versehentlich zu Boden fällt, lösen können, so dass die beiden Gehäuseteile sich ebenfalls voneinander lösen und die Akkuzellen beschädigt werden können oder ein Zugang zu denselben ermöglicht wird, was aus Sicherheitsgründen möglichst vermieden werden sollte.

Des Weiteren ist es möglich, die beiden Gehäuseteile durch Kleben miteinander zu verbinden, was jedoch nicht nur die Montage erheblich erschwert, sondern auch eine Reparatur des Akkupacks nahezu unmöglich macht.

Es ist daher Aufgabe der vorliegenden Erfindung, einen Akkupack zu schaffen, der einfach montiert werden kann und dessen Gehäuse sehr robust ist.

Erfindungsgemäß wird diese Aufgabe durch die in Anspruch 1 genannten Merkmale gelöst.

Durch die erfindungsgemäße Ausführung der Verbindungseinrichtung mit wenigstens zwei an einer Seite des Gehäuses angeordneten Hakenverbindungen und wenigstens einer an einer gegenüberliegenden Seite des Gehäuses angeordneten Schraubverbindung ergibt sich ein sehr kompakter Akkupack, der gleichzeitig einfach montiert werden kann. Ein weiterer Vorteil der erfindungsgemäßen Lösung besteht darin, dass durch die wenigstens eine Schraubverbindung eine sichere Verbindung der beiden Gehäuseteile gewährleistet ist, so dass diese sich auch nicht voneinander lösen, wenn der Akkupack auf den Boden fällt. Dadurch ergibt sich eine sehr hohe Sicherheit für den erfindungsgemäßen Akkupack.

Hierbei wird durch die Verwendung der Hakenverbindungen auf einer Seite des Gehäuses Bauraum eingespart, der beispielsweise beim Einsatz von Schraubverbindungen erforderlich wäre, sodass die Baugröße des Akkupacks bei der Verwendung identischer Akkuzellen verringert werden kann. Die wenigstens eine Schraubverbindung auf der gegenüberliegenden Seite gewährleistet jedoch die oben beschriebene sichere Verbindung der beiden Gehäuseteile. Andererseits wird durch den Verzicht auf eine höhere Anzahl an Schrauben die Montage wesentlich vereinfacht.

Des Weiteren ist erfindungsgemäß vorgesehen, dass die wenigstens zwei Hakenverbindungen jeweils eine an dem Gehäuseoberteil angeordnete Ausnehmung und einen an dem Gehäuseunterteil angeordneten, in die Ausnehmung eingreifenden Haken aufweisen. Dies gewährleistet eine einfache Montage der wenigstens zwei Hakenverbindungen einerseits und eine kompakte Bauweise des Akkupacks andererseits.

Um die wenigstens eine Schraubverbindung möglichst einfach und dennoch sicher auszuführen, kann des Weiteren vorgesehen sein, dass die wenigstens eine Schraubverbindung eine an einem der Gehäuseteile angeordnete Gewindebohrung und eine an dem anderen Gehäuseteil angeordnete, in die Gewindebohrung eingreifende Schraube aufweist.

Eine für die Praxis besonders vorteilhafte Ausführungsform der Erfindung kann darin bestehen, dass die Verbindungseinrichtung drei voneinander beabstandete Hakenverbindungen an der einen Seite des Gehäuses und zwei voneinander beabstandete Schraubverbindungen an der anderen Seite des Gehäuses aufweist. Durch die Verwendung dreier voneinander beabstandeter Hakenverbindungen ergibt sich eine gleichmäßige Verteilung der Spannkräfte, was einem Verzug der Gehäuseteile und der Bildung eines Spalts zwischen denselben entgegenwirkt. In Kombination mit den beiden Schraubverbindungen auf der gegenüberliegenden Seite des Gehäuses können die beiden Gehäuseteile so sicher und platzsparend miteinander verbunden werden, dass die Sicherheit des gesamten Akkupacks in jeder Situation gewährleistet ist. Des Weiteren ergibt sich durch den Einsatz zweier voneinander beabstandeter Schraubverbindungen eine gleichmäßige Kraftverteilung auf das Gehäuses sowie eine Symmetrie desselben.

Um die wenigstens eine Akkuzelle sicher zu halten, kann des Weiteren vorgesehen sein, dass in dem Gehäuse ein Zellenhalter zum Halten der wenigstens einen Ackuzelle angeordnet ist.

Eine weitere vorteilhafte Ausgestaltung der Erfindung kann darin bestehen, dass der Zellenhalter mehrere Haken zum Halten wenigstens einer Leiterplatte aufweist. Durch diese Haken ist es möglich, die wenigstens eine Leiterplatte und somit die zur Steuerung des Akkupacks dienende Elektronik vorzumontieren, was die Montage des gesamten Akkupacks wesentlich vereinfacht. Des Weiteren ist auf diese Weise ein sicherer Halt der Leiterplatte innerhalb des Gehäuses gewährleistet und es kann vorteilhafterweise auf den Einsatz von Schrauben verzichtet werden.

Hierbei ergibt sich eine sehr zuverlässige und exakte Positionierung der Leiterplatte, wenn der Zellenhalter zwei einander gegenüberliegende Führungselemente zum seitlichen Führen wenigstens einer Leiterplatte aufweist.

Um den Zellenhalter innerhalb des Gehäuses zu positionieren und damit die Montage zu vereinfachen, kann des Weiteren vorgesehen sein, dass der Zellenhalter wenigstens zwei Positionierelemente zum Eingreifen in jeweilige, in einem der Gehäuseteile angeordnete Ausnehmungen aufweist.

Um Toleranzen, die sich beispielsweise aufgrund unterschiedlicher Größen von Ackuzellen ergeben können, auszugleichen, kann des Weiteren vorgesehen sein, dass um den Umfang der wenigstens einen Akkuzelle ein Gummielement angeordnet ist.

Ein Elektrohandwerkzeuggerät mit einem Elektromotor und wenigstens einem lösbar mit dem Elektromotor verbindbaren, erfindungsgemäßen Akkupack ist in Anspruch 7 angegeben.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Figur 1: eine erste Explosionsansicht eines erfindungsgemäßen Akkupacks;
- Figur 2: eine zweite Explosionsansicht eines erfindungsgemäßen Akkupacks;
- Figur 3: eine Draufsicht auf ein Gehäuseteil des erfindungsgemäßen Akkupacks mit einem darin angeordneten Zellenhalter;
- Figur 4: einen Schnitt nach der Linie IV-IV aus Figur 3;

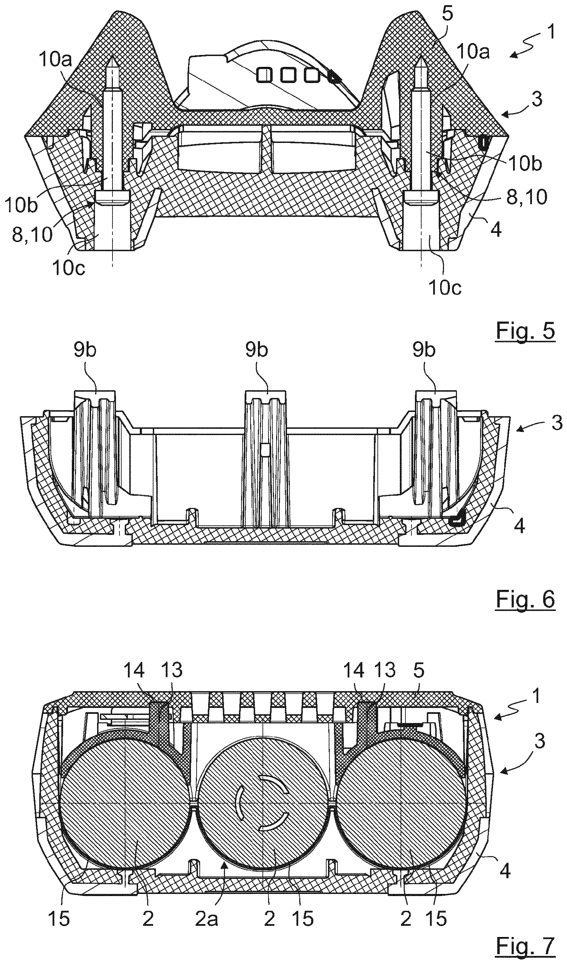

- Figur 5: einen Schnitt nach der Linie V-V aus Figur 3;
- Figur 6: einen Schnitt nach der Linie VI-VI aus Figur 3; und
- Figur 7: einen Schnitt nach der Linie VII-VII aus Figur 3.

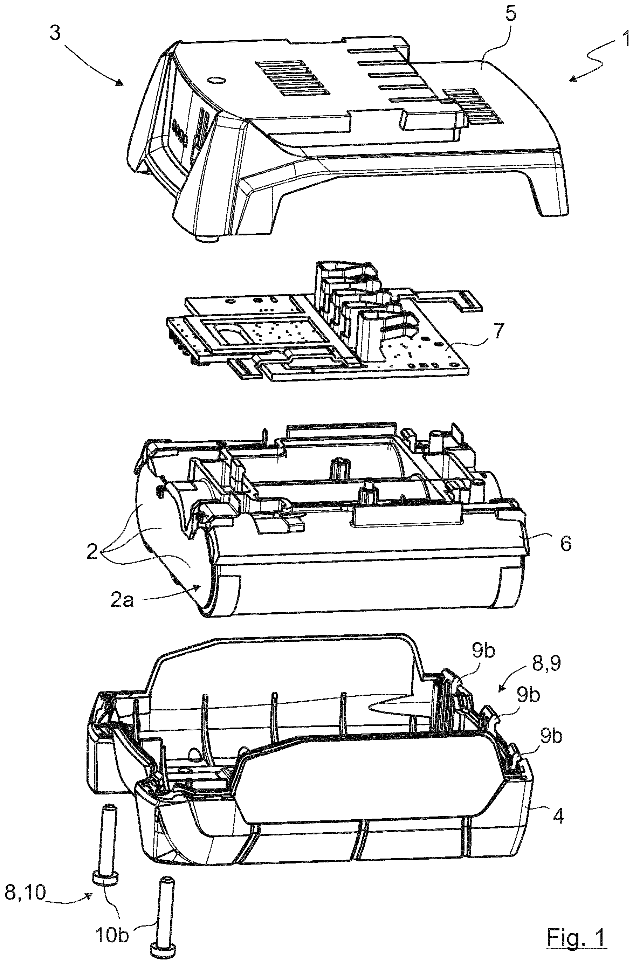

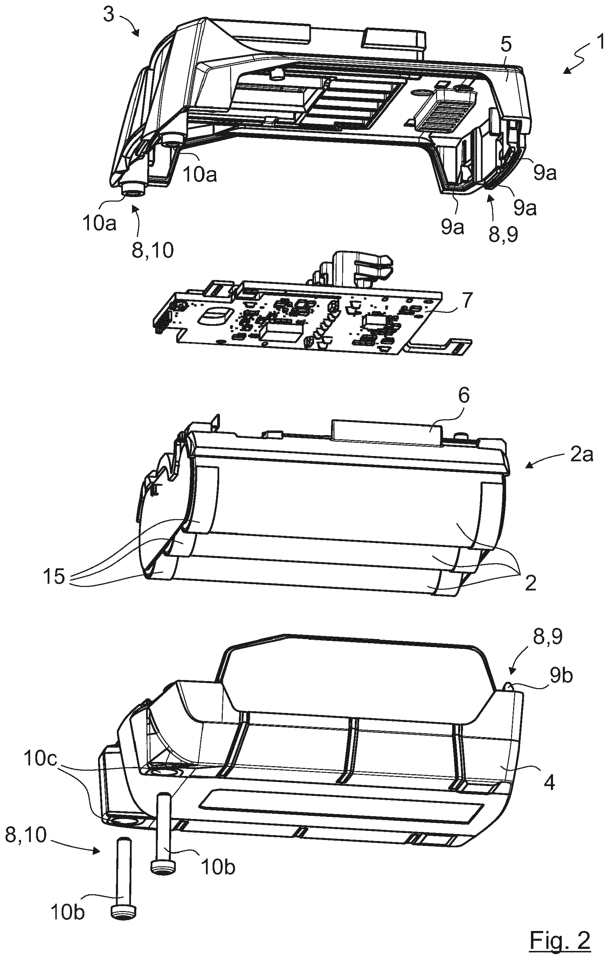

Die Figuren 1 und 2 zeigen eine Explosionsansicht eines Akkupacks 1, der für die Stromversorgung eines nicht dargestellten Elektromotors eines ebenfalls nicht dargestellten Elektrohandwerkzeuggeräts dient. Der Akkupack 1 weist in an sich bekannter Weise wenigstens eines Akkuzelle 2 auf. Im vorliegenden Fall sind mehrere Akkuzellen 2 vorgesehen und zu einem Akkuzellenblock 2a miteinander verbunden. Die Anzahl der von dem Akkuzellenblock 2a umfassten Akkuzellen 2 kann selbstverständlich variieren.

Des Weiteren weist der Akkupack 1 ein Gehäuse 3 auf, das wiederum zwei Gehäuseteile, nämlich ein Gehäuseunterteil 4 und ein Gehäuseoberteil 5, aufweist. Im vorliegenden Fall ist das zur Verbindung mit dem Elektrohandwerkzeuggerät dienende Gehäuseteil das Gehäuseoberteil 4. Selbstverständlich sind die Angaben "Gehäuseunterteil" und "Gehäuseoberteil" als beliebig anzusehen, da der Akkupack 1 in beliebiger Weise orientiert werden kann und diese Bezeichnungen auch von der Positionierung des Akkupacks 1 an dem Elektrohandwerkzeuggerät abhängen.

Der Akkuzellenblock 2a bzw. die wenigstens eine Akkuzelle 2 ist mittels eines Zellenhalters 6 gehalten. Der Zellenhalter 6 stellt dabei die sichere Halterung der Ackuzellen 2 innerhalb des Gehäuses 3 sicher. Außerdem weist der Akkupack 1 eine Leiterplatte 7 auf, die ebenfalls von dem Zellenhalter 6 gehalten ist und auf der sich unterschiedliche elektronische Bauelemente befinden, die zur Ansteuerung der Ackuzellen 2 dienen. Die Leiterplatte 7 und die sich auf derselben befindenden elektronischen Bauteile können von an sich bekannter Bauart sein und werden daher hierin nicht näher beschrieben.

Zur Verbindung der beiden Gehäuseteile 4 und 5 dient eine nachfolgend ausführlich beschriebene Verbindungseinrichtung 8. In den Figuren 1 und 2 sind die einzelnen Bauteile der Verbindungseinrichtung 8 jeweils mit dem Bezugszeichen 8 und zusätzlich mit dem jeweiligen Bestandteil der Verbindungseinrichtung 8 bezeichnet.

Die Verbindungseinrichtung 8 weist wenigstens zwei Hakenverbindungen 9 an einer ersten Seite des Gehäuses 3 und wenigstens eine Schraubverbindung 10 an einer gegenüberliegenden Seite des Gehäuses 3 auf. Mit der gegenüberliegenden Seite des Gehäuses 3 ist eine bei einem im Wesentlichen rechteckig ausgeführten Gehäuse 3 parallele und nicht angrenzende seitliche Wandung des Gehäuses 3 gemeint.

Im vorliegenden Fall sind an der einen Seite des Gehäuses 3 drei Hakenverbindungen 9 und an der gegenüberliegenden Seite des Gehäuses 3 zwei Schraubverbindungen 10 vorgesehen. Durch die drei voneinander beabstandeten Hakenverbindungen 9 wird eine gleichmäßige Verteilung der Spannkräfte beim Verbinden der Gehäuseteile 4 und 5 erreicht. Je nach Größe des Akkupacks 1 kann auch eine größere oder kleinere Anzahl der Hakenverbindungen 9 und/oder der Schraubverbindungen 10 vorgesehen sein. Unabhängig von der jeweiligen Anzahl sind dabei vorzugsweise an der einen Seite des Gehäuses 3 lediglich die Hakenverbindungen 9 und an der einen Seite des Gehäuses 3 lediglich die Schraubverbindungen 10 vorgesehen, d.h. es kommen an keiner Seite des Gehäuses 3 Hakenverbindungen 9 und Schraubverbindungen 10 gleichzeitig vor, was die Montage der beiden Gehäuseteile 4 und 5 wesentlich vereinfacht.

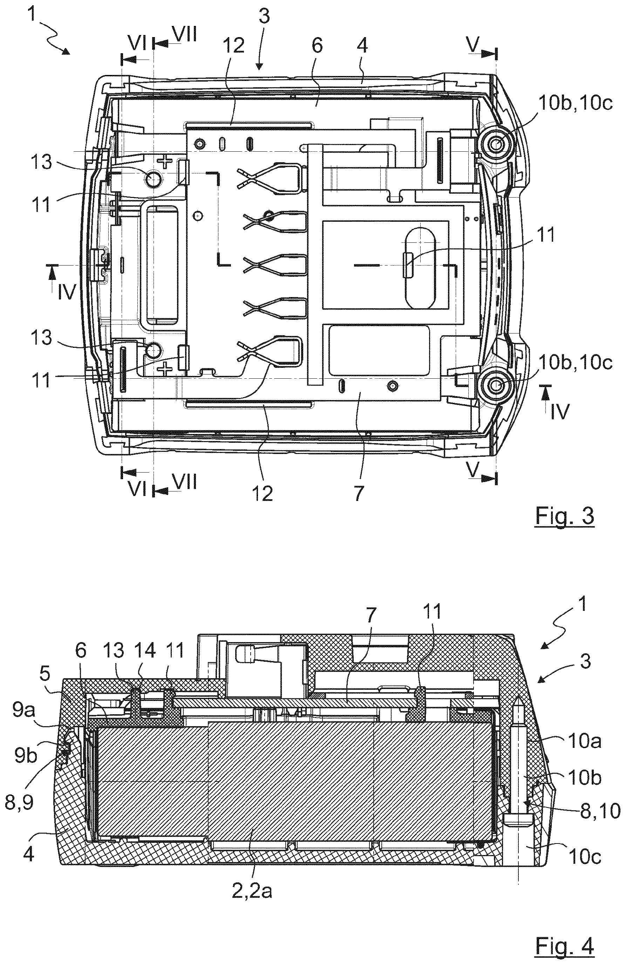

Hierbei weisen die Hakenverbindungen 9 jeweils eine an einem der Gehäuseteile 4 bzw. 5 angeordnete Ausnehmung 9a und einen an dem anderen Gehäuseteil 5 bzw. 4 angeordneten in die Ausnehmung 9a eingreifenden Haken 9b auf. In der Schnittdarstellung von Figur 4 ist eine der Ausnehmungen 9a und ein in dieselbe eingreifender Haken 9b sehr gut zu erkennen. Im vorliegenden Fall sind die Ausnehmungen 9a dem Gehäuseoberteil 5 und die Haken 9b dem Gehäuseunterteil 4 zugeordnet. Die Haken 9b bilden dabei jeweilige Hinterschneidungen, mit denen sie in den Ausnehmungen 9a gehalten sind.

Die wenigstens eine Schraubverbindung 10 bzw. im vorliegenden Fall die beiden Schraubverbindungen 10 weisen jeweils eine an einem der Gehäuseteile 4 bzw. 5 angeordnete Gewindebohrung 10a und eine in die Gewindebohrung 10a eingreifende Schraube 10b auf. Im vorliegenden Fall sind die Gewindebohrungen 10a dem Gehäuseoberteil 5 und die Schrauben 10b dem Gehäuseunterteil 4zugeordnet. Zur Aufnahme der Schrauben 10b weist das Gehäuseunterteil 4 eine entsprechende Durchgangsbohrung 10c auf.

Der Zellenhalter 6 weist mehrere Haken 11 zum Halten der Leiterplatte 7 auf. Im vorliegenden Fall sind drei Haken 11 vorgesehen, von denen zwei auf der einen und einer auf der gegenüberliegenden Seite der Leiterplatte 7 angeordnet sind. Durch die Haken 11 kann die Leiterplatte 7 auf sehr einfache Weise und insbesondere ohne den Einsatz von Schrauben an dem Zellenhalter 6 angebracht werden. Des Weiteren weist der Zellenhalter 6 zwei einander gegenüberliegende Führungselemente 12 auf, die zum seitlichen Führen der Leiterplatte 7 dienen.

Außerdem sind an dem Zellenhalter 6 zwei voneinander beabstandete Positionierelemente 13 angeordnet, die zum Eingreifen in jeweilige in einem der Gehäuseteile, im vorliegenden Fall in dem Gehäuseoberteil 5, angeordnete Ausnehmungen 14 dienen und die unerwünschte Bewegungen zwischen dem Zellenhalter 6 und dem Gehäuse 3 verhindern. Die Positionierelemente 13 sind im vorliegenden Fall als zylindrische Vorsprünge ausgebildet, die in die ebenfalls zylindrischen Ausnehmungen 14 eingreifen. Selbstverständlich sind auch andere Formen der Positionierelemente 13 und der Ausnehmungen 14 möglich.

Die Art und Weise der Verbindung der Leiterplatte 7 mit dem Zellenhalter 6 sowie die Positionierung des Zellenhalters 6 in dem Gehäuse könnte auch in einem Akkupack realisiert werden, dessen Gehäuseteile auf eine andere Art als hierin beschrieben miteinander verbunden sind.

Um den Umfang der wenigstens einen Akkuzelle 2, im vorliegenden Fall um sämtliche der Akkuzellen 2, sind jeweilige Gummielemente 15 angeordnet, die einen Toleranzausgleich für die Akkuzellen 2 innerhalb des Gehäuses 3 und eine Abdichtung gegen Staub bieten, was bei bestimmten Anwendungen sehr vorteilhaft sein kann. Vorzugsweise handelt es sich bei den Gummielementen 15 um Moosgummiringe, die um den Umfang der jeweiligen Akkuzelle 2 angeordnet sind.

Zum Montieren der beiden Gehäuseteile 4 und 5 miteinander werden die Haken 9b in die Ausnehmungen 9a des Gehäuseoberteils 5 eingehängt, wobei die beiden Gehäuseteile 4 und 5 leicht gegenüber einander geneigt sind, um das Einführen der Haken 9b in die Ausnehmungen 9a zu erleichtern. Dann werden die beiden Gehäuseteile 4 und 5 so gegeneinander verschwenkt, dass sie sich berühren und anschließend wird das Gehäuseunterteil 4 mit dem Gehäuseoberteil 5 verschraubt. Gegebenenfalls kann auf das Verschwenken der beiden Gehäuseteile 4 und 5 verzichtet werden. Dann werden die Haken 9b beim Einführen in die Ausnehmungen 9a leicht gebogen und rasten anschließend in dieselben ein. Die Montage der beiden Gehäuseteile 4 und 5 kann manuell oder automatisch, d.h. mit Hilfe einer geeigneten Handhabungseinrichtung, durchgeführt werden. Nach dem Anziehen der Schrauben 10b drückt das Gehäuseoberteil 5 auf den Zellenhalter 6 und die Leiterplatte 7 und presst diese beiden Bauteile somit gegen das Gehäuseunterteil 4.

## Patentansprüche

1. Akkupack (1), insbesondere für ein Elektrohandwerkzeuggerät, mit wenigstens einer Akkuzelle (2) und mit einem Gehäuse zur Aufnahme der wenigstens einen Akkuzelle (2), wobei das Gehäuse (3) zwei mittels einer Verbindungseinrichtung (8) miteinander verbindbare Gehäuseteile (4,5), nämlich ein Gehäuseunterteil (4) und ein Gehäuseoberteil (5) aufweist, wobei in dem Gehäuse (3) ein Zellenhalter (6) zum Halten der wenigstens einen Akkuzelle (2) angeordnet ist, und wobei der Zellenhalter (6) mehrere Haken (11) zum Halten wenigstens einer Leiterplatte (7) aufweist,
**dadurch gekennzeichnet, dass**
die Verbindungseinrichtung (8) wenigstens zwei an einer Seite des Gehäuses (3) angeordnete Hakenverbindungen (9) und wenigstens eine an einer gegenüberliegenden Seite des Gehäuses (3) angeordnete Schraubverbindung (10) aufweist, und dass die wenigstens zwei Hakenverbindungen (9) jeweils eine an dem Gehäuseoberteil (5) angeordnete Ausnehmung (9a) und einen an dem Gehäuseunterteil (4) angeordneten, in die Ausnehmung (9a) eingreifenden Haken (9b) aufweisen.

2. Akkupack nach Anspruch 1,
**dadurch gekennzeichnet, dass**
die wenigstens eine Schraubverbindung (10) eine an einem der Gehäuseteile (4,5) angeordnete Gewindebohrung (10a) und eine an dem anderen Gehäuseteil (5,4) angeordnete, in die Gewindebohrung (10a) eingreifende Schraube (10b) aufweist.

3. Akkupack nach Anspruch 1 oder 2,
**dadurch gekennzeichnet, dass**
die Verbindungseinrichtung (8) drei voneinander beabstandete Hakenverbindungen (9) an der einen Seite des Gehäuses (3) und zwei voneinander beabstandete Schraubverbindungen (10) an der anderen Seite des Gehäuses (3) aufweist.

4. Akkupack nach Anspruch 1,
**dadurch gekennzeichnet, dass**
der Zellenhalter (6) zwei einander gegenüberliegende Führungselemente (12) zum seitlichen Führen wenigstens einer Leiterplatte (7) aufweist.

5. Akkupack nach Anspruch 1 oder 4,
**dadurch gekennzeichnet, dass**
der Zellenhalter (6) wenigstens zwei Positionierelemente (13) zum Eingreifen in jeweilige, in einem der Gehäuseteile (4,5) angeordnete Ausnehmungen (14) aufweist.

6. Akkupack nach einem der Ansprüche 1 bis 5,
**dadurch gekennzeichnet, dass**
um den Umfang der wenigstens einen Akkuzelle (2) ein Gummielement (15) angeordnet ist.

7. Elektrohandwerkzeuggerät mit einem Elektromotor und mit wenigstens einem lösbar mit dem Elektromotor verbindbaren Akkupack (1) nach einem der Ansprüche 1 bis 6.

## Claims

1. Battery pack (1), in particular for a hand-held power tool, having at least one battery cell (2) and having a housing for receiving the at least one battery cell (2), the housing (3) comprising two housing parts (4, 5) which can be connected to one another by means of a connecting device (8), namely a lower housing part (4) and an upper housing part (5), a cell holder (6) for holding the at least one battery cell (2) being arranged in the housing (3), and the cell holder (6) having a plurality of hooks (11) for holding at least one printed circuit board (7),
**characterized in that**
the connecting device (8) has at least two hook connections (9) arranged on one side of the housing (3) and at least one screw connection (10) arranged on an opposite side of the housing (3), and **in that** the at least two hook connections (9) each have a recess (9a) arranged on the upper housing part (5) and a hook (9b) arranged on the lower housing part (4) and engaging in the recess (9a).

2. Battery pack according to claim 1,
**characterized in that**
the at least one screw connection (10) has a threaded bore (10a) arranged on one of the housing parts (4, 5) and a screw (10b) arranged on the other housing part (5, 4) and engaging in the threaded bore (10a).

3. Battery pack according to claim 1 or 2,
**characterized in that**
the connecting device (8) has three spaced-apart hook connections (9) on one side of the housing (3) and two spaced-apart screw connections (10) on the other side of the housing (3).

4. Battery pack according to claim 1,
**characterized in that**
the cell holder (6) has two opposite guide elements (12) for laterally guiding at least one printed circuit board (7).

5. Battery pack according to claim 1 or 4,
**characterized in that**
the cell holder (6) has at least two positioning elements (13) for engaging in respective recesses (14) arranged in one of the housing parts (4, 5).

6. Battery pack according to any of claims 1 to 5,
**characterized in that**
a rubber element (15) is arranged around the circumference of the at least one battery cell (2).

7. Hand-held power tool having an electric motor and at least one battery pack (1) according to one of claims 1 to 6 which can be detachably connected to the electric motor.

## Revendications

1. Bloc d'accumulateur (1), en particulier pour un appareil outil électrique portatif, doté d'au moins une cellule d'accumulateur (2) et d'un boîtier destiné à loger ladite au moins une cellule d'accumulateur (2), le boîtier (3) présentant deux parties (4, 5) de boîtier qui peuvent être reliées l'une à l'autre au moyen d'un dispositif de liaison (8), à savoir une partie inférieure (4) de boîtier et une partie supérieure (5) de boîtier, un support de cellules (6) destiné à assurer le maintien de ladite au moins une cellule d'accumulateur (2) étant disposé dans le boîtier (3), et le support de cellules (6) présentant une pluralité de crochets (11) destinés à assurer le maintien d'au moins une carte de circuit imprimé (7), **caractérisé en ce que** le dispositif de liaison (8) présente au moins deux liaisons par crochets (9) qui sont disposées sur un côté du boîtier (3) et au moins une liaison par vissage (10) qui est disposée sur un côté opposé du boîtier (3), et **en ce que** lesdites au moins deux liaisons par crochets (9) présentent respectivement un évidement (9a) qui est disposé sur la partie supérieure (5) de boîtier et un crochet (9b) qui est disposé sur la partie inférieure (4) de boîtier et qui s'engage dans l'évidement (9a).

2. Bloc d'accumulateur selon la revendication 1, **caractérisé en ce que** ladite au moins une liaison par vissage (10) présente un alésage fileté (10a) qui est disposé sur l'une des parties (4, 5) de boîtier et une vis (10b) qui est disposée sur l'autre partie (5, 4) de boîtier et qui s'engage dans l'alésage fileté (10a).

3. Bloc d'accumulateur selon la revendication 1 ou 2, **caractérisé en ce que** le dispositif de liaison (8) présente trois liaisons par crochets (9) à distance les unes des autres sur un côté du boîtier (3) et deux liaisons par vissage (10) à distance l'une de l'autre sur l'autre côté du boîtier (3).

4. Bloc d'accumulateur selon la revendication 1, **caractérisé en ce que** le support de cellules (6) présente deux éléments de guidage (12) qui se font face et qui sont destinés à guider latéralement au moins une carte de circuit imprimé (7).

5. Bloc d'accumulateur selon la revendication 1 ou 4, **caractérisé en ce que** le support de cellules (6) présente au moins deux éléments de positionnement (13) qui sont conçus de manière à s'engager dans les évidements (14) respectifs et qui sont disposés dans l'une des parties (4, 5) de boîtier.

6. Bloc d'accumulateur selon l'une quelconque des revendications 1 à 5, **caractérisé en ce qu'**un élément en caoutchouc (15) est disposé autour de la périphérie de ladite au moins une cellule d'accumulateur (2).

7. Appareil outil électrique portatif doté d'un moteur électrique et d'au moins un bloc d'accumulateur (1) selon l'une quelconque des revendications 1 à 6 qui peut être relié au moteur électrique de manière détachable.
